# EUROPEAN PATENT SPECIFICATION

(11) **EP 3 934 894 B1**
(45) Date of publication and mention of the grant of the patent: **10.04.2024**
(21) Application number: 19930579.8
(22) Date of filing: 28.05.2019
(51) Int. Cl.: B29C 64/393, B29C 64/165, B29C 64/295, B33Y 50/02, B33Y 10/00, B33Y 30/00, B22F 10/14, B22F 10/30, B22F 12/10, B22F 7/08, B22F 10/37, B22F 12/13, B22F 12/90

(54) **ADDITIVE MANUFACTURING SYSTEM AND METHOD**
GENERATIVE FERTIGUNGSSYSTEM UND METHODE
SYSTÈME DE FABRICATION ADDITIVE ET MÉTHODE

(43) Date of publication of application: 12.01.2022
(73) Proprietor: Hewlett-Packard Development Company, L.P., Spring, TX 77389 (US)
(72) Inventor: ERICKSON, Kristopher J., Palo Alto, California 94304 (US); WITTKOPF, Jarrid, Palo Alto, California 94304 (US); HARTMAN, Aja, Palo Alto, California 94304 (US); ZHAO, Lihua, Palo Alto, California 94304 (US)
(74) Representative: Haseltine Lake Kempner LLP
(86) International application number: PCT/US2019/034121
(87) International publication number: WO 2020/242451

(56) References cited:
- WO-A1-2016/099445
- WO-A1-2016/195665
- WO-A1-2017/196330
- WO-A1-2019/013751
- WO-A1-2019/022700
- WO-A1-2019/022700
- US-A1- 2018 370 141

## Description

### BACKGROUND

Additive manufacturing systems produce three-dimensional (3D) objects by building up layers of material. Some additive manufacturing systems are referred to as "3D printing devices" because they use inkjet or other printing technology to apply some of the manufacturing materials. 3D printing devices and other additive manufacturing devices make it possible to convert a computer-aided design (CAD) model or other digital representation of an object directly into the physical object. WO 2016/099445 A1 discloses, according to its abstract, a non-transitory processor readable medium with instructions thereon that when executed cause an additive manufacturing machine to partially or completely bury a part in layers of molten build material.

### BRIEF DESCRIPTION OF THE DRAWINGS

The accompanying drawings illustrate various examples of the principles described herein and are part of the specification. The illustrated examples are given merely for illustration, and do not limit the scope of the claims.
Fig. 1 is a block diagram of an additive manufacturing system for interrupted additive manufacturing, according to an example of the principles described herein.
Fig. 2 is a simplified top view of an additive manufacturing system for interrupted additive manufacturing, according to an example of the principles described herein.
Fig. 3 is a cross-sectional view of an additive manufacturing system for interrupted additive manufacturing, according to an example of the principles described herein.
Fig. 4 is a flow chart of a method for embedded component placement, according to an example of the principles described herein.
Fig. 5 is a flow chart of a method for embedded component placement, according to another example of the principles described herein.
Fig. 6 depicts a non-transitory machine-readable storage medium for interrupting an additive manufacturing operation, according to an example of the principles described herein.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Additive manufacturing systems make a three-dimensional (3D) object through the solidification of layers of a build material on a bed within the device. Additive manufacturing systems may make objects based on data in a 3D model of the object generated, for example, with a computer-aided drafting (CAD) computer program product. The model data is processed into slices, each slice defining portions of a layer of build material that is to be solidified.

In one example, to form the 3D object, a build material, which may be powder, is deposited on a bed. A fusing agent is then dispensed onto portions of the layer of build material that are to be fused to form a layer of the 3D object. The system that carries out this type of additive manufacturing may be referred to as a powder and fusing agent-based system. The fusing agent, which is placed in the desired pattern, increases the energy absorption of the underlying layer of build material on which the fusing agent is placed. The build material is then exposed to energy such as electromagnetic radiation. The electromagnetic radiation may include infrared light, laser light, or other suitable electromagnetic radiation. Due to the increased heat absorption properties imparted by the fusing agent, those portions of the build material that have the fusing agent patterned thereon heat to a temperature greater than the fusing temperature for the build material.

Accordingly, as energy is applied to a surface of the build material, the build material that has received the fusing agent, and therefore has increased energy absorption characteristics, fuses while that portion of the build material that has not received the fusing agent remains in powder form. Those portions of the build material that receive the agent and thus have increased heat absorption properties may be referred to as fused portions. By comparison, the applied heat is not so great so as to increase the heat of the portions of the build material that are free of the agent to this fusing temperature. Those portions of the build material that do not receive the agent and thus do not have increased heat absorption properties may be referred to as unfused portions.

Accordingly, a predetermined amount of heat is applied to an entire bed of build material, the portions of the build material that receive the fusing agent, due to the increased heat absorption properties imparted by the fusing agent, fuse and form the object while the unfused portions of the build material are unaffected, i.e., not fused, in the presence of such application of thermal energy. This process is repeated in a layer-wise fashion to generate a 3D object. The unfused portions of material can then be separated from the fused portions, and the unfused portions recycled for subsequent 3D printing operations.

While such additive manufacturing operations have greatly expanded manufacturing and development possibilities, further development may make such 3D printing operations even more practical. For example, a vast array of materials and processes may not be compatible with multi-jet fusion, or other additive manufacturing processes. By developing an approach to resume printing after a substantial pause in the additive manufacturing process, allowing for a part which has been placed within the bed to have a print started on top of that part, a much wider variety of materials, components, and objects can be created either partially or fully by additive manufacturing. This can allow for electronic, optical, aesthetic, or other components to be embedded within a 3D printed object. This may also allow for previously fabricated parts, using additive manufacturing or other manufacturing techniques, to have an additive manufacturing object, or portion thereof executed on top of that part.

In some examples, by pre-heating components to be placed in a 3D printed object to near the bed temperature, components can be placed either within a 3D printed object or within a bed which has undergone prior heating to near the print temperature, to prevent overheating the placed component. This can enable the additive manufacturing process to create a wide variety of multi-functional parts with wide ranging applications, including traceable parts, complex electronic devices, optical devices, aesthetic parts, multi-material parts (metal or ceramic + plastic), etc.

Specifically, the present specification describes an additive manufacturing according to claim 1.

The present specification also describes a method according to claim 6.

The present specification also describes a non-transitory machine-readable storage medium according to claim 13.

Such systems and methods 1) facilitate additive manufacturing after a substantial pause in printing, such as the placement of a component inside a 3D printed object, 2) allows for embedding of, and printing on, various objects, which can have been fabricated through a variety of operations; 3) provides for good adhesion between the bottom and top portions of 3D printed parts; and 4) mechanically protects the embedded component and provides enhanced security as it is difficult to move an embedded component within a part printed without destroying or greatly damaging the part. However, it is contemplated that the devices disclosed herein may address other matters and deficiencies in a number of technical areas.

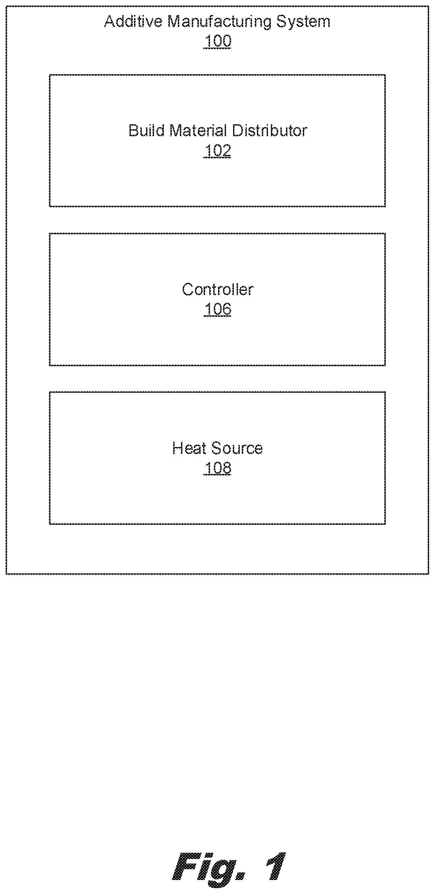

Turning now to the figures, Fig. 1 is a block diagram of an additive manufacturing system (100) for interrupted additive manufacturing, according to an example of the principles described herein. As used in the present specification and in the appended claims, the term "powdered build material" or "build material" is meant to refer to any form of particulate material and may include various types of material including plastic, metal, and ceramic.

As described above, a multi-jet fusion device, a metal-jet fusion device, a selective laser sintering device, a selective laser melting device, or any other type of additive manufacturing system (100), can be tuned to allow for a print resumption off an existing part or object. That is, the present additive manufacturing system (100) facilitates resumption of printing after a substantial pause. During these pauses, components are placed onto or into the printed part using a placement device (108). For example, a radio frequency identification (RFID) chip may be placed in a 3D printed object.

The present specification describes a few particular examples, including placement of an RFID chip halfway through a 3D printed part and then resuming the print after the chip has been placed, thereby embedding the chip within the 3D printed part. Such a pause in printing allows for a wide variety of hybrid structure objects to be fabricated. This may include parts that were 3D printed, removed from the 3D print bed, post-processed (including the insertion of large components which are not amenable to in-situ placement), placed back into the bed, and 3D printed onto again, thereby embedding the components. However, the pause and resumption of printing may be used in other scenarios as well.

For example, not falling within the scope of the claims, a 3D printed part may exhibit any number of defects during printing. Upon the detection of these defects, printing may be paused to remediate the defect. One type of defect includes part curl in the bottom layers of a part. Another type of defect may include lifting of parts and swelling of surrounding powder from overheating. This second type of defect is associated with hot, large-volume parts. The physical mechanism for curl in the initial layers of the part may be from a variety of mechanisms. However, as the part curls, the part may lift off of the bed surface and become elevated relative to the surrounding build material. The elevated part may then collide with translating devices within the additive manufacturing device such as a spreader roller, hopper, an energy emitting device, and/or a printing agent dispenser initially and may rock back and forth with each pass or may by dragged across the surface of the build region and the build material deposited thereon.

The remedial measures to address such part lift and drag vary. For example, the remedial measure may be to adjust a layer thickness of a deposited layer, adjusting an amount of an agent deposited on the build region, adjusting torque output by a material spreader, removing protrusions from the the x,y plane with an ablation laser, and combinations thereof. Accordingly, in this example, the interruption in the pausing of the 3D printing process may be triggered by detection of such a defect such that a remedial action can be carried out during the interruption. The additive manufacturing system (100) includes a build material distributor (102) to deposit layers of powered build material onto a bed. Each layer of the build material that is fused in the bed forms a slice of the 3D printed object such that multiple layers of fused build material form the entire 3D printed object. The build material distributor (102) may acquire build material from build material supply receptacles, and deposit such acquired material as a layer in the bed, which layer may be deposited on top of other layers of build material already processed that reside in the bed. As will be described below, the build material deposited by the build material distributor may be solidified in any number of ways to form a 3D printed object.

The additive manufacturing system (100) also includes a controller (106). The controller (106) may include various hardware components, which may include a processor and memory. The processor may include the hardware architecture to retrieve executable code from the memory and execute the executable code. As specific examples, the controller as described herein may include computer readable storage medium, computer readable storage medium and a processor, an application specific integrated circuit (ASIC), a semiconductor-based microprocessor, a central processing unit (CPU), and a field-programmable gate array (FPGA), and/or other hardware device.

The memory may include a computer-readable storage medium, which computer-readable storage medium may contain, or store computer usable program code for use by or in connection with an instruction execution system, apparatus, or device. The memory may take many types of memory including volatile and non-volatile memory. For example, the memory may include Random Access Memory (RAM), Read Only Memory (ROM), optical memory disks, and magnetic disks, among others. The executable code may, when executed by the controller (106) cause the controller (106) to implement at least the functionality of interrupting printing and resuming printing as described below.

Additionally, during operation, the controller (106) may serve to provide instructions to a number of other devices associated with the additive manufacturing system (100) to accomplish the functionality of the additive manufacturing system (100). Specifically, the controller (106) directs a heat source to turn on, turn off, increase emitted electromagnetic radiation output, and/or decrease emitted electromagnetic radiation output. Additionally, the controller (106) may direct the build material distributor (102) to add a layer of build material. Further, the controller (106) may send instructions to direct the printhead to selectively deposit the agent onto the surface of a layer of the build material. The controller (106) may also direct the printhead to eject the agent at specific locations to form a 3D printed object slice.

As set out in the claims, the controller (106) interrupts printing of the 3D printed object to place a component. For example, as described above, it may be desirable to insert a component into a 3D printed object. As set out in the claims, the controller (106) interrupts printing to facilitate such a placement. In some examples, interrupting the printing includes deactivating the build material distributor (102) and any build material hardening device. In the example where such components are placed on scanning carriage(s), the controller (106) also moves these scanning carriage(s) away from the component such that an object may be placed.

Once a printing operation is paused, a component is placed. Other actions may also be carried out such as any number of corrective actions to remedy a detected print quality aberration. After the operation that is to be carried out during the pause is complete, the controller (106) resumes printing. That is, the controller (106) selectively re-activates the build material distributor (102) and a hardening device to continue the operation of sequentially operating to form slices of a 3D printed object.

Note that during printing prior to the placement of the component and during printing following placement of the component, the controller (106) may alter the operation of the build material distributor (102) and/or any device that hardens the build material. For example, in some examples the placed component may not be flush with the most recently deposited layer. That is, the component top surface may be higher than the last deposited layer. This raised component surface may interfere with subsequent printing and may even interfere with certain additive manufacturing components. For example, a wiper, or mechanical leveling device may pass over the surface of the build material, catch on the raised surface of the component and dislodge it. The dislodged component may then interfere with the powdered build material in a way that alters the additive manufacturing process.

The controller (106) may control additive manufacturing to alleviate this situation. For example, the controller (106) may trigger deposition of at least one layer of powdered build material, and in some cases more, such that a surface of the powdered build material is flush with a protruding component. Doing so ensures that the component does not protrude and thus does not interfere with the operation of any additive manufacturing system (100) components.

In another example, the controller (106) may trigger deposition of a layer of powdered build material having an increased thickness such that the powdered build material is flush with a protruding component. In this example, the controller (106) may cause the bed of the additive manufacturing system (100) to drop more than it otherwise would and to cause the build material distributor (102) to deposit more material then it otherwise would. As in the example described above, this ensures that the powdered build layer is flush with the protruding component such that the protruding component does not interfere with, or otherwise impact the formation of remaining slices.

In another example where a fusing agent is used, following placement of the component, the controller (106) may trigger deposition of just a fusing agent without powdered build material. Doing so ensures adherence of interface layers of the 3D printed object to one another. In a particular example, for a few cycles, no powder layers are deposited upon the portion of the part created prior to component placement, however fusing agent is still deposited. In this example, the extra fusing agent added to the first few layers following component placement boosts the print temperature during the first few layers and creates better adhesion or fusing between the pre-component placement layers and the post-component placement layers. In one particular example, the fusing agent used between interface layers is different than fusing agent used to form non-interface layers. This interface fusing agent may have a higher heating efficiency than the non-interface layer fusing agent. This higher heating efficiency can ensure greater adhesion between pre-component and post-component portions of the 3D printed object as it may result in selectively heating the specific layers which in turn reduces the viscosity of those layers of the build material. Accordingly, application of energy of these interface layers raises the temperature of the interface fusing agent applied to the interface layers to a temperature sufficient to create a lower viscosity melt pool that will generate the greater adhesion.

Thus, the interface layers with the interface fusing agent printed section can be heated to a temperature hotter than the surrounding sections. In some examples, the interface fusing agent region can be heated 5 to 50 degrees Celsius more than the non-interface fusing agent patterned region. In one example, the interface fusing agent patterned region can be heated approximately 15 degrees Celsius more than the non-interface fusing agent patterned region. Using a different, and more heat sensitive fusing agent, may increase print quality as the more heat sensitive fusing agent allows for good adhesion between the bottom and top portions of a 3D printed part.

In another example, the interface fusing agent may include a plasticizer functional agent. The plasticizer functional agent may reduce the viscosity of the build material at select areas by chemically altering the melt characteristics of the build material. In one example, the plasticizer functional agent decreases the melt viscosity of the build material through a physiochemical mechanism. In one example, multiple interface functional agents, such as a fusing agent and a plasticizer functional agent are applied to locally reduce the viscosity of the build material at the interface.

In yet another example, a higher loading of fusing agent in the interface layers is used, thereby locally overheating that region, which effectively overmelts the interface layers. This allows for reduce the local viscosity at the interface to ensure a strong junction between the interface layers.

As set out in the claims, the additive manufacturing system includes a heat source to maintain fused portions of a partially-printed 3D printed object between a solidification temperature and a melting temperature for the build material. In some examples, the solidification temperature may be a recrystallization temperature.

That is, if not heated, the powder build material and the surrounding environment may cool. Such a cooling may alter the formation, strength, and dimensional accuracy of a 3D printed object. Since there may be a long interruption during placement of the component or performance of a remedial action, the 3D printed object could cool and warp. For example, if the temperature of the fused 3D printed object and the build area drops below a solidification temperature, the 3D printed object will warp, print resumption cannot occur, and/or dimensional accuracy is lost.

By comparison, if the temperature rises above a melting temperature of the build material, the 3D printed object will overfuse and dimensional accuracy will suffer. Accordingly, the heat source (108) keeps the 3D printed object below the melting temperature of the build material but above the solidification temperature of the build material. Thus, the heat source (108) maintains the environment within a temperature range where dimensional uniformity and product quality is not compromised during the interruption in the printing for the placement of the component. Without such thermal control, the build material properties may adjust such that the component cannot be placed therein and/or 3D printed object quality may deteriorate.

The heat source (108) may be any component that applies thermal energy. Examples of heat sources (108) include tungsten lamps, infrared lamps, visible halogen lamps, resistive heaters, light emitting diodes LEDs, and lasers.

The operation of the heat source (108) may be controlled by the controller (106). Specifically, the controller (106) may direct the heat source (108) to turn on, turn off, increase emitted electromagnetic radiation output, and/or decrease emitted electromagnetic radiation output.

While specific reference is made to certain additive manufacturing processes such as multi-jet fusion or metal-jet fusion, the systems and methods may be applicable to any additive manufacturing process such as stereolithography, selective laser sintering, three-dimensional binder jetting, and fused deposition modeling, among others.

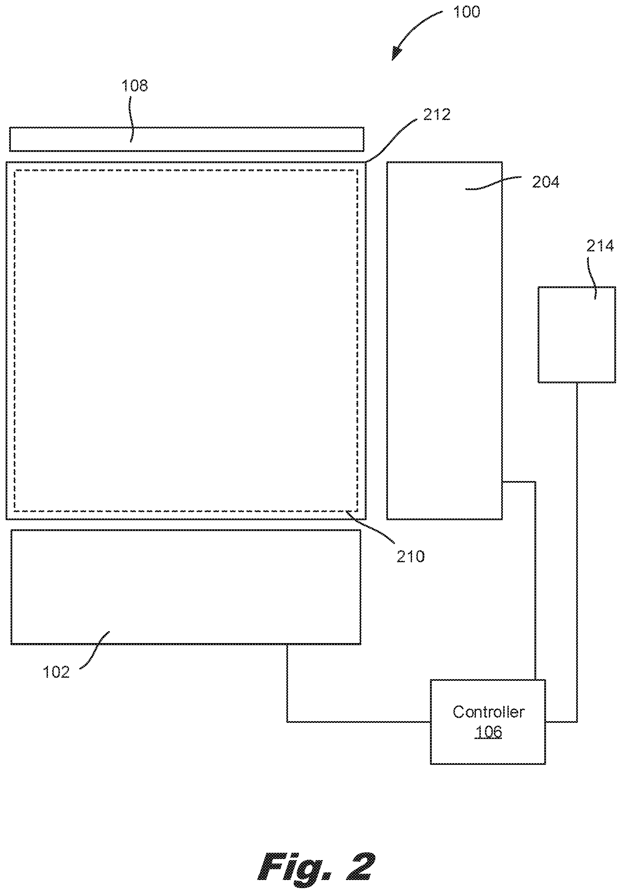

Fig. 2 is a simplified top view of an additive manufacturing system (100) for interrupted additive manufacturing, according to an example of the principles described herein. As described above, apparatuses for generating three-dimensional objects may be referred to as additive manufacturing systems (100). The additive manufacturing system (100) described herein may correspond to three-dimensional printing systems, which may also be referred to as three-dimensional printers. In an example of an additive manufacturing process, a layer of build material may be formed in a build area (210). As used in the present specification and in the appended claims, the term "build area" refers to an area of space wherein the 3D object is formed. The build area (210) may refer to a space bounded by a bed (212). The build area (210) may be defined as a three-dimensional space in which the additive manufacturing system (100) can fabricate, produce, or otherwise generate a 3D printed object. That is, the build area (210) may occupy a three-dimensional space on top of the bed (212) surface. In one example, the width and length of the build area (210) can be the width and the length of bed (212) and the height of the build area (210) can be the extent to which bed (212) can be moved in the z direction. Although not shown, an actuator, such as a piston, can control the vertical position of bed (212).

The bed (212) may accommodate any number of layers of build material. For example, the bed (212) may accommodate up to 4,000 layers or more. In an example, a number of build material supply receptacles may be positioned alongside the bed (212). Such build material supply receptacles source the build material that is placed on the bed (212) in a layer-wise fashion.

In examples described herein, a build material may include a powder-based build material, where the powder-based build material may include wet and/or dry powder-based materials, particulate materials, and/or granular materials. In some examples, the build material may be a weak light absorbing polymer. In some examples, the build material may be a thermoplastic. Furthermore, as described herein, the functional agent may include liquids that may facilitate fusing of build material when energy is applied. The fusing agent may be a light absorbing liquid, an infrared or near infrared absorbing liquid, such as a pigment colorant.

Fig. 2 depicts the build material distributor (102) to successively deposit layers of the build material in the build area (210). As described above, various types of build material may be held within the build material distributor (102). One example of a powdered build material is polyamide 12, which has a fusing temperature of 185 degrees Celsius. In this example, portions of the polyamide 12 that are heated above 185 degrees Celsius fuse together to form a solid object. While specific mention is made to polyamide 12 as a fusible build material, other build materials may be used, including, but not limited to polyamide 11 or other fusible materials.

As described above, in some examples the build material distributor (102) may be coupled to a scanning carriage. In operation, the build material distributor (102) places build material in the build area (210) as the scanning carriage moves over the build area (210) along the scanning axis. While Fig. 2 depicts the build material distributor (102) as being orthogonal to the agent distributor (204), in some examples the build material distributor (102) may be in line with the agent distributor (204).

As described above, the additive manufacturing system (100) may include a device that hardens the powdered build material. In the example depicted in Fig. 2, the additive manufacturing system (100) also includes an agent distributor (204) to deposit at least one agent onto a layer of powdered build material to form a 3D printed object. In some examples, an agent distributor (204) includes at least one liquid ejection device to distribute a functional agent onto the layers of build material.

As described above, the agent distributor may distribute a variety of agents. One specific example of an agent is a fusing agent, which increases the energy absorption of portions of the build material that receive the fusing agent to selectively solidify portions of a layer of powdered build material. A liquid ejection device may include at least one printhead (e.g., a thermal ejection based printhead, a piezoelectric ejection based printhead, etc.). In one example, printheads that are used in inkjet printing devices may be used as an agent distributor (204). In this example, the fusing agent may be a printing liquid. In other examples, an agent distributor (204) may include other types of liquid ejection devices that selectively eject small volumes of liquid.

The agent distributor (204) may deposit other agents as well. For example, the agent distributor (204) distributes a detailing agent that sharpens the resolution of the 3D printed object and provides cooling to selected regions of the powdered build material. The agent distributor (204) may deposit other functional agents to provide functionality to the 3D printed object (e.g., electrical conductivity). For example, the agent distributor (204), may deposit a conductive agent to electrically connect components within the 3D printed object. For example, it may be the case that the components placed in a 3D printed object are an antenna and an RFID chip. Such a conductive agent may form electrical traces that electrically couples these components. The conductive agent may be formed, at least in part, of metallic nanoparticles dispersed within a solvent. As yet another example, the agent distributor may eject a binding agent onto the powder build material which binds particles of the powder build material together, which will later be sintered to form the 3D printed object.

As yet another example, the agent distributor (204) may deposit other materials than fusing agent for selectively solidifying portions of the layer. For example, the agent distributor (204) may deposit a plasticizer for reducing material viscosity. That is, the agent distributor (204) can deposit any variety of agents. Each of these agents can be activated under certain conditions such as exposure to heat or energy.

As described above, printheads that are used in inkjet printing devices (e.g., a thermal ejection based printhead, a piezoelectric ejection based printhead, etc.) may be used as an agent distributor (204). In this example, the fusing agent may be a printing liquid. In other examples, an agent distributor (204) may include other types of liquid ejection devices that selectively eject small volumes of liquid. In some examples, the agent distributor (204) is coupled to a scanning carriage, and the scanning carriage moves along a scanning axis over the build area (210).

Fig. 2 also depicts a placement device (214) which like the build material distributor (102) and the agent distributor (204) travels over the build area (210) to place a component in a particular location in the build area (210). As set out in the claims, the additive manufacturing system (100) includes a placement device (214) to place a component in a body of a 3D printed object. That is, the placement device (214) may take a component from a repository, move it to a desired location over the 3D printed object and place it. That is, the placement device (214) positions the component within a three-dimensional object being fabricated simultaneously with fabrication of the three-dimensional object. In some examples, the placement device (214) is positioned on a scanning carriage that moves across the bed (212) of the additive manufacturing system (100).

As set out in claim 1, the placement device (214) operates under the direction of the controller (106) for placement of the component. In one particular example, the placement device (214) includes a y-axis actuator, an x-axis actuator, a z-axis actuator, a connector arm, a nozzle, and a controllable vacuum source. In this example, a nozzle (via a suction force, collects the component. The actuators and connector arm can be employed to move the component vertically and horizontally to position the component appropriately.

While particular reference is made to one example of a placement device (214), other types of placement devices (214) may be implemented in accordance with the principles described herein. The component to be inserted may be of a variety of types including an antenna and non-3D printed objects, like a PCB-board, which are placed into the powder bed and then printed upon. Accordingly, the present additive manufacturing system (100) can interrupt a printing process such that a component, such as a component that is incompatible with additive manufacturing processes, can be inserted into the body of a 3D printed object, thus providing security, mechanical protection, and aesthetic value for a 3D printed object.

Figure 2 also depicts the controller (106) that, as described above, controls operation of the various components depicted to print, pause printing, place a component, and resume printing during the embedding of a component during additive manufacturing and the heat source (108).

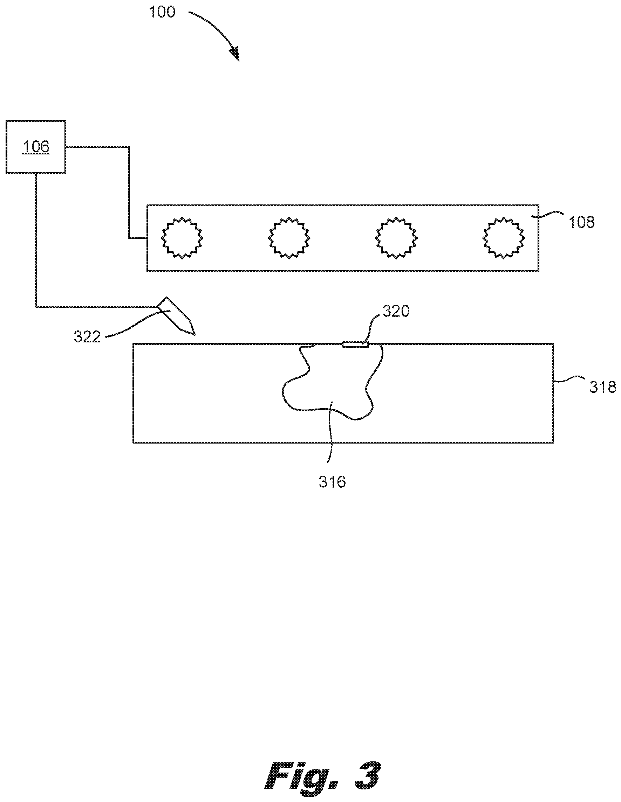

Fig. 3 is a cross-sectional view of an additive manufacturing system (100) for interrupted additive manufacturing, according to an example of the principles described herein. As described above, the additive manufacturing operation includes the sequential deposition of layers of a powdered build material (318) that is selectively hardened in a number of ways to form a 3D printed object (316). In the example depicted herein, at a certain point in time the controller (106) interrupts the printing by pausing the build material distribution and any agent distribution, and a placement device (Fig. 1, 108) places a component (320) within the borders defining the 3D printed object (316) to ultimately be embedded therein. Fig. 3 also depicts the heat source (108) to maintain a temperature of a top surface of the powdered build material (318) between a solidification temperature and a melting temperature for the build material (318).

As described above, if the temperature rises above a melting temperature of the build material (318), the 3D printed object (316) will overfuse and dimensional accuracy will suffer. Due to thermal bleed, powder material that is not meant to form part of the 3D printed object (316) may semi-permanently adhere to the 3D printed object (316), which can be difficult to remove and affects dimensional accuracy. The removal of these adjacent unfused portions can be difficult, time-intensive, and may even damage the 3D printed object (316). Accordingly, the heat source (108) keeps the 3D printed object (316) below the melting temperature of the build material (318) but above the solidification temperature of the build material (318). Thus, the heat source (108) maintains the environment within a temperature range where dimensional uniformity and product quality is not compromised during the interruption in the printing for the placement of the component (320). Without such thermal control, the build material (318) properties may adjust such that the component (320) cannot be placed therein and/or 3D printed object (316) quality may deteriorate.

As a specific example, the controller (106) activates the heat source (108) just during interruption of printing to place the component (320). That is, the heat source (108) is not active outside the interruption period. Put another way, as layers of build material (318) are being deposited by the controller (106) managed build material distributor (Fig. 1, 102) and agent distributor (Fig. 2, 204), the heat source (108) may be inactivated. Then, at a predetermined time, potentially identified by a build file, the controller (106) deactivates these components, moves the scanning carriages to which they may be affixed, and activates the heat source (108) to maintain the temperature of the build material (318) between the solidification temperature and melting temperature for that particular build material (318). That is, the temperature range that the heat sources (108) are intended to maintain varies based on the build material (318) and a number of other properties.

Once the component has been placed, and the placement device (Fig. 2, 214) has been removed from the build area (Fig. 2, 210), the controller (106), as set out in claim 1, deactivates the heat source (108) and resumes printing by selectively activating the build material distributor (Fig. 1, 102). In some examples, the heat source (108) may be different than a heat source used to apply energy and "fuse" certain portions of the build material (318) layer. In other examples, the heat source (108) may be the same as the heat source used for fusing. In this example, rather than turning the heat source (108) on and off, the controller (106) may simply increase/decrease the intensity of the heat source (108) to provide the desired temperature control.

In some examples, the additive manufacturing system (100) includes a thermal sensor (322) positioned within the bed (Fig. 2, 212). In this example, the controller (106) alters the emitting characteristics of the heat source (108) based on feedback from the thermal sensor (322). That is, the thermal sensor (322) detects a temperature condition of various portions of the surface of the build material (318).

The thermal sensor (322) may be any type of sensor that can detect electromagnetic radiation such as infrared radiation emitting from a layer of build material (318) on the surface of the bed (Fig. 2, 212). For example, the thermal sensor (322) may include any number of thermal cameras. Any number of thermal cameras may be used to detect the temperature condition of the whole build material (318) surface or a portion of the build material (318) surface. For example, the thermal sensor (322) may measure a matrix of points that cover the whole surface.

Based on the information collected from the thermal sensor (322), the controller (106) may adjust the heat sources (108). For example, if the thermal sensor (322) detects a temperature approaches the melting temperature, the controller (106) may turn down the heat source (108) to ensure the build material (318) does not rise above the melting temperature. By comparison, if the thermal sensor (322) detects a temperature approaches the solidification temperature, the controller (106) may turn up the heat source (108) to ensure the build material (318) does not fall below the solidification temperature.

Accordingly, the present additive manufacturing system (100) allows for print resumption after a substantial pause in printing. This can facilitate the placement of components (320) on top of or within a 3D printed object (316). The component (320) can then be subsequently embedded within the 3D printed object (316) by resuming printing. As described above, the additive manufacturing system (100) may print on top of various objects which may have been fabricated through a variety of additive, or other, manufacturing processes. In other examples, the printing may be resumed at the beginning of a print operation. That is, a component (320) may be placed in an empty bed (Fig. 2, 212) whereon printing is initiated. Accordingly, a 3D printed object (316) can be placed on top of complex electronic components like printed circuit boards, different material objects like ceramics or organic materials (like wood), or a variety of other possibilities. In yet another example, these components, (printed circuit boards, ceramic substrates, organic substrates, and others), may be embedded into a 3D printed object (316).

As described above embedding components (320) into a 3D printed object (316) may enhance the aesthetics of a 3D printed object (316) as the component (320), which may not match desired aesthetics for the 3D printed object (316), is concealed in the 3D printed object (316) itself. Moreover, the embedding of the component (320) in the 3D printed object (316) provides mechanical protection of the component (320). That is, certain components (320) may be fragile and susceptible to mechanical and/or electrical damage. By embedding the components (320), they are protected from such mechanical and electrical forces. Still further, embedding components (320) into a 3D printed object (316) may also provide enhanced security of the component (320) and/or 3D printed object (316). That is, it is difficult, if possible, to remove an embedded component (320) within a 3D printed object (316) printed this way without destroying or greatly damaging the 3D printed object (316). Accordingly, the component (320) may include unique anti-counterfeiting information which could not be hacked as it cannot be reached without destroying the 3D printed object (316).

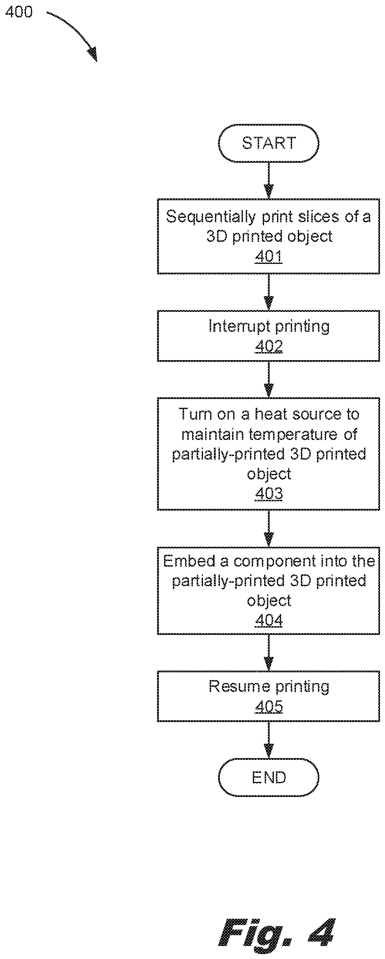

Fig. 4 is a flow chart of a method (400) for embedded component (Fig. 3, 320) placement, according to an example of the principles described herein. As described above, additive manufacturing, and in particular 3D printing involves the layer-wise deposition of build material and curing/sintering/fusing of certain portions of that layer to form a slice of a 3D printed object (Fig. 3, 316). Accordingly, in this example, the method (400) includes sequentially printing (block 401) slices of a 3D printed object (Fig. 3, 316). This includes sequential activation, per slice, of a build material distributor (Fig. 1, 102) and an agent distributor (Fig. 2, 204) and the scanning carriages to which they may be coupled so that each distribute its respective composition across the surface.

At some point during printing, the controller (Fig. 1, 106) interrupts printing (block 402) for placement of a component (Fig. 3, 320). In some examples, the last layer printed may be laid down in a fashion that differs from the other layers. For example, the layer on which the component (Fig. 3, 320) is to be placed may be thicker than other layers. This may be done so that the component (Fig. 3, 320) may be embedded into the layer, rather than just being placed on top of it. That is, it may be desired that a component (Fig. 3, 320) is flush with the layer in which it is to be deposited and the placement device (Fig. 1, 108) may push down on the component (Fig. 3, 320) during insertion for such a purpose. A layer that is thicker requires less force to be displaced by the component (Fig. 3, 320).

During the interruption, a heat source (Fig. 1, 108) is turned on (block 403) to maintain fused portions of a partially-printed 3D printed object (Fig. 3, 316) between a solidification temperature and a melting temperature. That is, as described above, if previously fused portions cool down too much, they may begin to warp, which affects part dimensions and geometry in a way that may affect part aesthetics, geometry, and in some cases may even preclude its completion.

However, the heat sources (Fig. 1, 108) cannot be unbounded. That is, if the heat source (Fig. 1, 108) applies too much thermal energy, i.e., above the melting temperature of the fused portions, these fused portions may not properly fuse in a desired shape. In some cases, the thermal bleed from the excess thermal energy may leak towards adjacent, and unfused, build material thus resulting in temporary, or semi-permanent caking.

Also, during the interruption, the component (Fig. 3, 320) is embedded (block 404), via the placement device (Fig. 2, 214) into the body of the partially-printed 3D printed object (Fig. 3, 316). That is, the placement device (Fig. 2, 214) may collect a component (Fig. 3, 320), for example from a tray, and place it in a location determined by the controller (Fig. 1, 106). That is, the controller (Fig. 1, 106) may include a file that not only defines the slices, geometry, and other characteristics of the 3D printed object (Fig. 3, 316), but also includes an identification of a predefined location where the component (Fig. 3, 320) is to be placed. The controller (Fig. 1, 106) thereby sends control signals to the placement device (Fig. 2, 214) to place the component (Fig. 3, 320) in this predefined location.

As described above, since there may be a long delay between the printing of the layer which receives the placed component (Fig. 3, 320) and the subsequently printed layer, the 3D printed object (Fig. 3, 316) could easily cool and warp leading to poor adhesion between these different portions. This issue is addressed by keeping the 3D printed object (Fig. 3, 316) below the melting temperature of the build material (Fig. 3, 318) but above the solidification temperature of the build material (Fig. 3, 318).

Once the component (Fig. 3, 320) is placed, printing of slices of the 3D printed object (Fig. 3, 316) is resumed (block 405) which envelopes the component (Fig. 3, 320) in the 3D printed object (Fig. 3, 316). That is, the controller (Fig. 1, 106) selectively re-activates the build material distributor (Fig. 1, 102) and agent distributor (Fig. 2, 204) to continue with 3D printing.

As described above, for a first few layers, e.g., interface layers, a specific operation may be carried out where build material (Fig. 3, 318) is deposited without fusing agent to create a flush surface and/or fusing agent may be deposited without build material (Fig. 3, 318) to create better adhesion of the pre-component (Fig. 3,320) layers with the post-component (Fig. 3, 320) layers. Thus, the present method (400) describes how any component, formed of any material by any process including those not compatible with additive manufacturing techniques, can be placed inside a 3D printed object (Fig. 3, 316), all while accounting for the effects that may result when interrupting the printing to place the component (Fig. 3, 320).

A specific example is now provided of the method (400). In this example, the component (Fig. 3, 320) is an RFID chip. Either during, or before interruption (block 402) of the printing, the placement device (Fig. 2, 214) may be activated, which may include turning on a vacuum source coupled to a nozzle. The nozzle is then placed adjacent the RFID chip to retain it. That is, the vacuum on the nozzle was turned on and the RFID chip was placed at the end of the nozzle. In some examples, the RFID chip stayed in position during the entirety of the printing of layers up to the layer where the component (Fig. 3, 320) is to be placed.

Prior to printing, the placement device (Fig. 2, 214) may be calibrated with regard to its position relative to the bed (Fig. 2, 212). This may be done by printing test files and then positioning the nozzle until a correlation between the two positions was achieved for x-axis, y-axis, and the z-axis. In some examples, the resolution of the placement device (Fig. 2, 214) may be 5 microns in z- and y- axis, with 22-micron resolution for the x- axis.

Printing is then interrupted (block 402), the heat source (Fig. 1,, 108) is turned on (block 403) to maintain the temperature and the carriage that includes the placement device (Fig. 2, 214) is moved over the chip placement location in an x-direction and the chip is placed or embedded (block 404).

As described above, during this interruption (block 402) the partially printed part (Fig. 3, 316) and the build material (Fig. 3, 318) bed are maintained at a temperature between the solidification temperature and fusing temperature of the build material (Fig. 3, 318). If below that range, the 3D printed object (Fig. 3, 316) will warp and print resumption cannot occur. If above the range, the 3D printed object (Fig. 3, 316) will overfuse and dimensional accuracy will suffer. The heat source (Fig. 1, 108) is thereby controlled in intensity during the interruption to maintain the 3D printed object (Fig. 3, 316) and build material (Fig. 3, 318) within that temperature range.

Regarding the embedding (block 404) of the component (Fig. 3, 320), in a specific example, the nozzle is positioned in the y and z axes. The vacuum is then removed and the nozzle is lifted, thus leaving the component (Fig. 3, 320) in the predefined location. In some examples, the interruption may be about 12 seconds or less. That is, during this time, printing is paused, a first command turns on the heat source (Fig. 1, 108), which in a specific example maintains the 3D printed object (Fig. 3, 316) temperature at 165 degrees Celsius, keeping the 3D printed object (Fig. 3, 316) from cooling and warping while also ensuring that the 3D printed object (Fig. 3, 316) does not overfuse. A second command issued during this interruption moves the carriage of the placement device (Fig. 2, 214) into the proper x-axis position for the placement device (Fig. 2, 214) to subsequently place the RFID chip. During this time, a single command may be executed for placement of the chip in the correct y-axis and z-axis positions, to hold the chip for 0.5 s (for polymer flow around the chip), and return of the placement device (Fig. 2, 214) to a safe position for subsequent carriage movement. In some examples, the actual placement event takes approximately 2-2.5 seconds.

In a specific example, given a chip that is 400 microns thick and the layer thickness for the print is 80 microns, the chip may be embedded into the 3D printed object (Fig. 3, 316) within a chip receiving area. Any portion of the chip that is above the print bed powder level could result in the roller hitting the placed component (Fig. 3, 320). Accordingly, by at least partially embedding the RFID chip into the 3D printed object (Fig. 3, 316) during the placement portion of this process, any minor movement of the RFID chip by the spreading roller at the resumption (block 405) of printing may not result in the chip being moved relative to the attached 3D printed object (Fig. 3, 316). If larger components (Fig. 3, 320) are desired to be placed within the 3D printed object (Fig. 3, 316), the z-height of the bed (Fig. 2, 212) could be lowered and a thicker layer of build material (Fig. 3, 318) could be deposited and fused in the desired regions for embedding such components (Fig. 3, 320).

The carriage with the placement device (Fig. 2, 214) is then moved back to a start position, the heat source (Fig. 1, 108) is deactivated and printing is resumed (block 405) to print the remaining layers of the 3D printed object (Fig. 3, 316) on top of the component (Fig. 3, 320).

It should be noted that even though the embedded RFID chip disclosed here as an example and other components may undergo a high temperature print process (up to -190C), components (Fig. 3, 320) still function as intended. This is because components (Fig. 3, 320) may be selected that remain stable after high temperature exposure.

While specific reference is made to embedding a single component (Fig. 3, 320), in some examples, multiple components (Fig. 3, 320) may be embedded within a single layer or different components (Fig. 3, 320) may be placed at different build heights within a single 3D printed object (Fig. 3, 316).

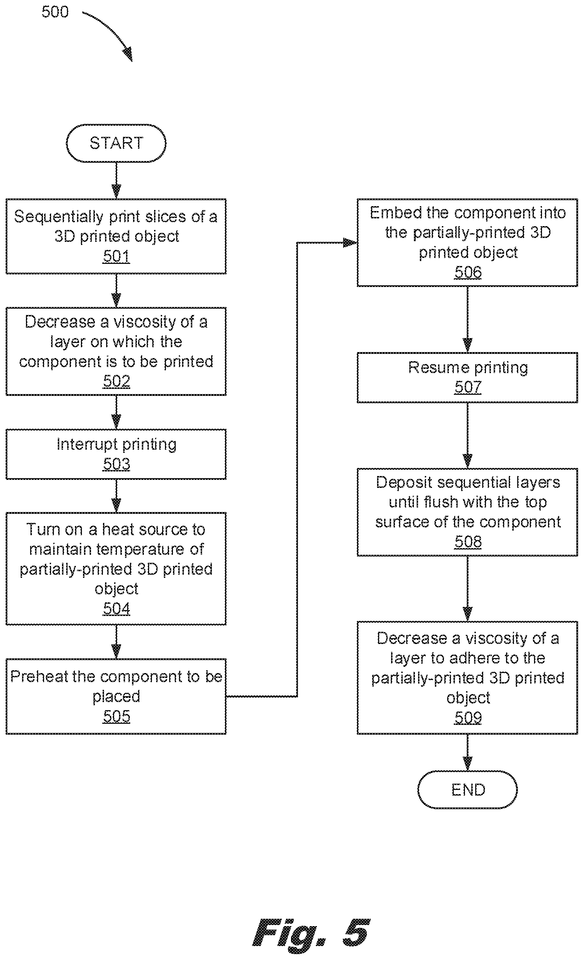

Fig. 5 is a flow chart of a method (500) for embedded component (Fig. 3, 320) placement, according to another example of the principles described herein. As described above, a printing process is initiated in which slices of a 3D printed object (Fig. 3, 316) are sequentially printed (block 501). This may be performed as described above in connection with Fig. 4.

In some examples, the component (Fig. 3, 320) is not only placed on the partially-printed 3D printed object (Fig. 3, 316), but is embedded therein. In some examples, to embed (block 404) a component (Fig. 3, 320) within an already printed part (Fig. 3, 316) without the placed component (Fig. 3, 320) extending above the top of the printed part (Fig. 3, 316) and impeding the successful distribution of the next layer, a receiving area of the partially-printed 3D part (Fig. 3, 316) may be overheated. That is, a viscosity of a layer on which the component (Fig. 3, 320) is to be printed is decreased (block 502).

In one specific example, a higher loading of fusing agent in the component (Fig. 3, 320) receiving area is used, thereby locally overheating that region, which effectively overmelts the target region. This allows for facile insertion of a placed component (Fig. 3, 320) without the disruption of the rest of the 3D printed object (Fig. 3, 316) in the powder bed (Fig. 2, 212).

As a specific example, when the component (Fig. 3, 320), which may be an RFID chip, is brought into position by the placement device (Fig. 2, 214), the build material (Fig. 3, 318) in the receiving area is molten, and build material (Fig. 3, 318) is able to be displaced such that the component (Fig. 3, 320) is embedded within the 3D printed object (Fig. 3, 316) and is flush with the top level of the build material (Fig. 3, 318). The molten build material (Fig. 3, 318) also conforms to the component (Fig. 3, 320) surface and allows for a better adhesion to the 3D printed object (Fig. 3, 316). Specifically, a carbon-black based fusing agent may be used in the component (Fig. 3, 320) placement location, resulting in a localized lower melt viscosity in this region from the elevated temperature in the region.

Another approach for locally decreasing the melt viscosity is to have plasticizer deposited locally in the component (Fig. 3, 320) placement location, which causes a decreased melt viscosity through a chemical mechanism as opposed to through a thermo-physical mechanism. A number of plasticizer functional agents could either be used separately or in the same ink as the fusing agent, which may be more effective for achieving the lowered viscosity which is desired for the component (Fig. 3, 320) placement location. This may be desirable since a lower temperature results in a similarly low melt viscosity, which may result in better dimensional accuracy of the 3D printed object (Fig. 3, 316) since a solely heating solution for lowering viscosity may result in thermal bleed around the component (Fig. 3, 320) placement location.

In one particular example, the fusing agent used at the component placement location is different than fusing agent used to form other regions. This different fusing agent may have a higher heating efficiency than the other fusing agent. This higher heating efficiency can ensure greater adhesion between the component and the layer in which it is formed as it may result in selectively heating the specific layers which in turn reduces the viscosity of those layers of the build material.

By elevating the temperature of the component (Fig. 3, 320) receiving area in the 3D printed object (Fig. 3, 316), the component (Fig. 3, 320) may be embedded into the molten polymer, so that it does not protrude out from the build material, which would prevent the placed component (Fig. 3, 320) from impeding with roller movement when resuming printing. This allows for the same layer thickness to be maintained throughout the process, thus maintaining the print resolution even with a placed component (Fig. 3, 320).

As set out in the claims, printing is then interrupted (block 503) and a heat source (Fig. 1, 108) turned on (block 504) as described above in connection with Fig. 4. In some examples, the component (Fig. 3, 320) to be placed may be preheated (block 505) to a temperature maintained during printing. That is, a difference between an ambient temperature component (Fig. 3, 320) and the powder bed (Fig. 2, 212) may result in thermal bleed which can affect the component (Fig. 3, 320) and/or the 3D printed object (Fig. 3, 316). Accordingly, preheating (block 505) the component (Fig. 3, 320) to near bed temperature prevents any such issues and results in a more accurate and robust 3D printed object (Fig. 3, 316).

In some examples, the component (Fig. 3, 320) may be heated past the print temperature. This can be useful as there could be thermal losses as the component (Fig. 3, 320) travels from the heater to the bed (Fig. 2, 212) and the extra heat can help to further melt the polymer in the receiving area.

In other words, components (Fig. 3, 320) which are inserted into the build material (Fig. 3, 314) may be at a temperature near the build temperature of the additive manufacturing process. If the component (Fig. 3, 320) is substantially lower than the build temperature of the print, it may cool the region around which it is placed, which could cause solidification of the polymer around the receiving region causing warpage of the layer or part and in some cases could cause a failed insertion of the component. Accordingly, by preheating the component (Fig. 3, 320), the likelihood of these results is decreased.

The component (Fig. 3, 320) may then be embedded (block 506) into the 3D printed object (Fig. 3, 316) and printing may resume (block 507) as described above in connection with Fig. 4.

As described above, resumption (block 405) of printing may include a few instances of uniquely controlled deposition. For example, a different layer thickness can be used to embed the placed component (Fig. 3, 320) if it protrudes higher than the build material (Fig. 3, 318) level or additional layers could be deposited. That is, sequential layers of a powdered build material may be deposited (block 508) onto the component (Fig. 3, 320) without applying fusing agent. This may be done until the powdered build material (Fig. 3, 318) in the bed (Fig. 2, 212) is flush with a top surface of the component (Fig. 3, 320). In this example, extra fusing (through agents, lamp passes or even additional point/addressable energy sources) could be added to fuse a thicker layer of build material (Fig. 3, 318) equal to the height that the component (Fig. 3, 320).

In another example, printing may resume (block 405) with no build material (Fig. 3, 318) layers being deposited upon the portion of the 3D printed object (Fig. 3, 316) previously created. During these layers, the loadings of fusing agent may be similar to those used during the initial print or may be different. That is, by adding extra fusing agent to the first few interface layers following print resumption, the print temperature during the first few layers is boosted which creates better adhesion or fusing between pre-component layers and post-component layers. In other words, upon resuming printing, a viscosity of at least one layer is decreased (block 509) to adhere the at least one layer to the partially printed 3D printed object.

In another example of facilitating good adhesion between the pre-component layers and the post-component layers, a separately addressable file may be used for the first few layers following component (Fig. 3, 320) placement, which file implements a high loading of fusing agent which is printed. Doing so may allow for a temperature spike at the resumption (block 405) of printing, which will cause good adhesion between the two portions of the 3D printed object (Fig. 3, 316). In some example, since two different absorption level fusing agents are being used (FA - highest absorption level, AFA - medium absorption level), a higher temperature rise can be created during the printed layers at the interface between the two printed portions as compared to temperature rises being created during the non-interface print layers (using AFA).

In yet another example, in order to facilitate good adhesion between the placed component (Fig. 3, 320) and the interface layers, an adhesion layer could be used. This could include thermally or chemically activated glues or solder pastes. After the part (Fig. 3, 316) is completed, the part (Fig. 3, 316) is allowed to cool, removed from the powder bed, and sandblasted.

Another specific example is now provided which describes placing components (Fig. 3, 320) in an empty print bed (Fig. 2, 212), which can then have an additive manufacturing print on top of the component (Fig. 3, 320). In this example, the component (Fig. 3, 320) is a previously 3D printed object which has electrical components placed in sockets. A top of the object is flat. As described above, the component (Fig. 3, 320) may be grabbed by a placement device (Fig. 2, 214) and in some examples pre-heated and placed into a bed (Fig. 2, 212). As described above, during this time, the powder bed (Fig. 2, 212) and/or the component (Fig. 3, 320) may be brought to a near build temperature via a heat source (Fig. 1, 108). The component (Fig. 3, 320) is then placed. Printing is then initiated as described above. In some examples fresh build material (Fig. 3, 318) is rolled over the component (Fig. 3, 320) which helps to level the component (Fig. 3, 320) within the bed (Fig. 2, 212) and levels the build material (Fig. 3, 318) across the bed (Fig. 2, 212) surface.

In the example of placing a component (Fig. 3, 320) in a partially-printed 3D printed part (Fig. 3, 316), when placed into the bed (Fig. 2, 212), the placed component (Fig. 3, 320) may displace polymer build material (Fig. 3, 318). By leveling with a roller, this build material (Fig. 3, 318) may be redistributed. Furthermore, any slight protrusion of the component (Fig. 3, 320) out of the build material (Fig. 3, 318) may be corrected for by the roller. Any large error in placement which results in a substantial protrusion, or a component (Fig. 3, 320) which is too far embedded can be corrected by the placement device (Fig. 2, 214) by either pushing in a particular location or by removing the component (Fig. 3, 320) and re-attempting insertion. This may be monitored by an optical system like a profilometer or a stereovision system.

As described above, parts other than 3D printed parts can be inserted into the bed (Fig. 2, 212) and have an additive manufacturing print resumed upon those parts. That is, polymer parts (including polymers of different types than the build material (Fig. 3, 318) which may or may not have been 3D printed), metallic parts, ceramic parts, organic materials and a variety of other materials. In general, these other materials are selected due to being thermally stable up to additive manufacturing print temperatures and that may have a largely planar surface upon which to resume the print.

In one particular example, an entire functional electronic board could be inserted, which electronic board may have 3D printing being executed on the bottom, flat portion of the board. In this example, once the bottom portion of the board is 3D printed on, that part could be removed, a planar surface could be achieved on the top portion of the board by embedding it into an epoxy (or other) material, and then 3D printing could be resumed upon this newly created flat surface. Thus, the entire PCB would be embedded into a final part which has 3D printing done both on the bottom and the top of the board.

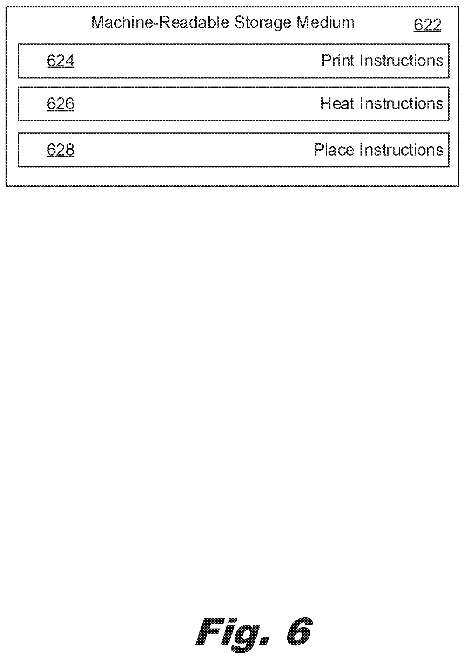

Fig. 6 depicts a non-transitory machine-readable storage medium (622) for embedding components (Fig. 3, 320) in a 3D printed object (Fig. 3, 316), according to an example of the principles described herein. To achieve its desired functionality, a computing system includes various hardware components. Specifically, a computing system includes a processor and a machine-readable storage medium (622). The machine-readable storage medium (622) is communicatively coupled to the processor. The machine-readable storage medium (622) includes a number of instructions (624, 626, 628) for performing a designated function. The machine-readable storage medium (622) causes the processor to execute the designated function of the instructions (624, 626, 628). The machine-readable storage medium (622) can store data, programs, instructions, or any other machine-readable data that can be utilized to operate the additive manufacturing system (Fig. 1, 100). Machine-readable storage medium (622) can store computer readable instructions that the processor of the controller (Fig. 1, 106) can process, or execute. The machine-readable storage medium (622) can be an electronic, magnetic, optical, or other physical storage device that contains or stores executable instructions. Machine-readable storage medium (622) may be, for example, Random Access Memory (RAM), an Electrically Erasable Programmable Read-Only Memory (EEPROM), a storage device, an optical disc, etc. The machine-readable storage medium (622) may be a non-transitory machine-readable storage medium (622).

Referring to Fig. 6, print instructions (624), when executed by the processor, cause the processor to sequentially print slices of a three-dimensional (3D) printed object (Fig. 3, 316). Heat instructions (626), when executed by the processor, cause the processor to, during a pause in printing, turn on a heat source to maintain fused portions of a partially-printed 3D printed object (Fig. 3, 316) between a solidification temperature and a melting temperature. Place instructions (628), when executed by the processor, cause the processor to place a component (Fig. 3, 320) to be printed on into a build area. As described above, the component (Fig. 3, 320) may be placed into an empty powder bed. For example, a component may be placed into polymer powder next to a part which is being printed and then is printed upon. In one specific example, the part being printed upon may connect with the part that was separate when the placement event occurred. That is, the top portion of the part could bridge over to meet the placed component.

Such systems and methods 1) facilitate additive manufacturing after a substantial pause in printing, such as the placement of a component inside a 3D printed object, 2) allows for embedding of, and printing on, various objects, which can have been fabricated through a variety of operations; 3) provides for good adhesion between the bottom and top portions of 3D printed parts; and 4) mechanically protects the embedded component and provides enhanced security as it is difficult to move an embedded component within a part printed without destroying or greatly damaging the part. However, it is contemplated that the devices disclosed herein may address other matters and deficiencies in a number of technical areas.

## Claims

1. An additive manufacturing system (100), comprising:
a build material distributor (102) to deposit layers of powdered build material (318) onto a bed (212) to form a three-dimensional (3D) printed object;
a placement device (214) to place a component (320) on a layer of the 3D printed object (316);
a fusing agent distributor (204);
a heat source (108);
a controller (106) configured to:
deactivate the build material distributor (102) to interrupt printing of the 3D printed object, printing being interrupted to place the component;
activate the heat source (108) to, during the interruption in printing, maintain a temperature of fused portions of a partially printed 3D object between a solidification temperature and a melting temperature for the build material;
control the placement device (214) to place a component on a layer of the 3D printed object (316);
deactivate the heat source (108); and
re-activate the build material distributor (102) to resume printing of the 3D printed object.

2. The additive manufacturing system (100) of claim 1, wherein the controller is configured such that the heat source (108) is not active outside of the interruption.

3. The additive manufacturing system (100) of claim 1, wherein:
the additive manufacturing system (100) further comprises a thermal sensor (322) placed within the bed; and
the controller alters the emitting characteristics of the heat source (108) based on feedback from the thermal sensor (322).

4. The additive manufacturing system (100) of claim 1, wherein, following placement of the component, the controller (106) performs at least one of:
triggering deposition of multiple layers of powdered build material to be flush with a protruding component; and
triggering deposition of a layer of powdered build material having an increased thickness to be flush with a protruding component.

5. The additive manufacturing system of claim 1, wherein, the controller is configured to trigger deposition of a fusing agent without powdered build material distribution, following placement of the component, to adhere interface layers of the 3D printed object to one another.

6. A method, comprising:
sequentially printing (401, 501) slices of a three-dimensional (3D) printed object (316);
interrupting (402, 503) the printing to:
turn on (403, 504) a heat source (318) to maintain fused portions of a partially-printed 3D printed object (316) between a solidification temperature and a melting temperature; and
embed (404, 506), via a placement device (214), a component (320) into a body of the partially-printed 3D printed object; and
resuming (405, 507) printing slices of the 3D printed object to envelop the component in the 3D printed object.

7. The method of claim 6, wherein sequentially printing (401, 501) slices of a three-dimensional (3D) printed object (316) comprises depositing layers of powdered build material (318) onto a bed (212), and wherein a layer on which the component is to be placed is thicker than other layers.

8. The method of claim 6, wherein sequentially printing (401, 501) slices of a three-dimensional (3D) printed object (316) comprises depositing layers of powdered build material (318) onto a bed (212), and wherein the method further comprises decreasing (502) a viscosity of a layer on which the component is to be placed, by overheating a receiving area of a partially-printed 3D part, by using a carbon-black based fusing agent, by having plasticizer deposited locally in the component, by using a fusing agent with higher heating efficiency than an non-interface layer fusing agent, by having a higher loading of fusing agent in the interface layers, or by applying multiple interface functional agents.

9. The method of claim 6, wherein sequentially printing (401, 501) slices of a three-dimensional (3D) printed object (316) comprises depositing layers of powdered build material (318) onto a bed (212), and wherein the method further comprises, upon resuming printing, decreasing a viscosity of at least one interface layer to adhere a pre-component portion of the 3D printed object with a post-component portion of the 3D printed object, by overheating a receiving area of a partially-printed 3D part, by using a carbon-black based fusing agent, by having plasticizer deposited locally in the component, by using a fusing agent with higher heating efficiency than an non-interface layer fusing agent, by having a higher loading of fusing agent in the interface layers, or by applying multiple interface functional agents.

10. The method of claim 6, wherein sequentially printing (401, 501) slices of a three-dimensional (3D) printed object (316) comprises depositing layers of powdered build material (318) onto a bed (212), and wherein an interface fusing agent is used to adhere interface layers, the interface fusing agent being different from the fusing agent used to form non-interface layers.

11. The method of claim 6, further comprising, upon resuming printing, depositing (508) sequential layers of a powdered build material onto the component without applying fusing agent, until the powdered build material in the bed is flush with a top surface of the component.

12. The method of claim 6, further comprising preheating (505) the component to be printed on to a temperature maintained during printing.

13. A non-transitory machine-readable storage medium (622) encoded with instructions executable by a processor, the machine-readable storage medium comprising instructions to cause the system of claim 1 to execute the method of claim 6.

## Patentansprüche

1. Additivfertigungssystem (100), das umfasst:
einen Baumaterialverteiler (102), um Schichten aus pulverförmigem Baumaterial (318) auf ein Bett (212) abzuscheiden, um ein dreidimensionales (3D) Druckobjekt auszubilden;
eine Platzierungsvorrichtung (214), um eine Komponente (320) auf einer Schicht des 3D-Druckobjekts (316) zu platzieren;
einen Schmelzmittelverteiler (204);
eine Wärmequelle (108);
eine Steuerung (106), die für Folgendes konfiguriert ist:
Deaktivieren des Baumaterialverteilers (102), um ein Drucken des 3D-Druckobjekts zu unterbrechen, wobei das Drucken unterbrochen wird, um die Komponente zu platzieren;
Aktivieren der Wärmequelle (108), um während der Unterbrechung des Druckens eine Temperatur geschmolzener Abschnitte eines teilweise gedruckten 3D-Objekts zwischen einer Verfestigungstemperatur und einer Schmelztemperatur für das Baumaterial aufrechtzuerhalten;
Steuern der Platzierungsvorrichtung (214), um eine Komponente auf einer Schicht des 3D-Druckobjekts (316) zu platzieren;
Deaktivieren der Wärmequelle (108); und
erneutes Aktivieren des Baumaterialverteilers (102), um das Drucken des 3D-Druckobjekts fortzusetzen.

2. Additivfertigungssystem (100) nach Anspruch 1, wobei die Steuerung derart konfiguriert ist, dass
die Wärmequelle (108) außerhalb der Unterbrechung nicht aktiv ist.

3. Additivfertigungssystem (100) nach Anspruch 1, wobei:
das Additivfertigungssystem (100) ferner einen thermischen Sensor (322), der innerhalb des Betts platziert ist, umfasst; und
die Steuerung die emittierenden Eigenschaften der Wärmequelle (108) auf der Basis einer Rückmeldung von dem thermischen Sensor (322) ändert.

4. Additivfertigungssystem (100) nach Anspruch 1, wobei die Steuerung (106) nach Platzierung der Komponente mindestens eines von Folgendem durchführt:
Auslösen der Abscheidung mehrerer Schichten aus pulverförmigem Baumaterial, um mit einer vorstehenden Komponente bündig zu sein; und
Auslösen der Abscheidung einer Schicht aus pulverförmigem Baumaterial, die eine erhöhte Dicke aufweist, um mit einer vorstehenden Komponente bündig zu sein.

5. Additivfertigungssystem nach Anspruch 1, wobei die Steuerung konfiguriert ist, um die Abscheidung eines Schmelzmittels ohne pulverförmige Baumaterialverteilung auszulösen, nach Platzierung der Komponente, um Grenzschichten des 3D-Druckobjekts aneinander zu kleben.

6. Verfahren, das umfasst:
sequenzielles Drucken (401, 501) von Scheiben eines dreidimensionalen (3D) Druckobjekts (316);
Unterbrechen (402, 503) des Drucks für Folgendes:
Einschalten (403, 504) einer Wärmequelle (318), um geschmolzene Abschnitte eines teilweise gedruckten 3D-Druckobjekts (316) zwischen einer Verfestigungstemperatur und einer Schmelztemperatur aufrechtzuerhalten; und
Einbetten (404, 506), über eine Platziervorrichtung (214), einer Komponente (320) in einen Körper des teilweise gedruckten 3D-Druckobjekts; und
Fortsetzen (405, 507) des Druckens von Scheiben des 3D-Druckobjekts, um die Komponente in das 3D-Druckobjekt einzuhüllen.

7. Verfahren nach Anspruch 6, wobei das sequenzielle Drucken (401, 501) von Scheiben eines dreidimensionalen (3D) Druckobjekts (316) das Abscheiden von Schichten aus pulverförmigem Baumaterial (318) auf ein Bett (212) umfasst, und wobei eine Schicht, auf der die Komponente platziert werden soll, dicker als andere Schichten ist.

8. Verfahren nach Anspruch 6, wobei das sequenzielle Drucken (401, 501) von Scheiben eines dreidimensionalen (3D) Druckobjekts (316) das Abscheiden von Schichten aus pulverförmigem Baumaterial (318) auf ein Bett (212) umfasst, und wobei das Verfahren ferner ein Verringern (502) einer Viskosität einer Schicht umfasst, auf der die Komponente platziert werden soll, durch Überhitzen eines Aufnahmebereichs eines teilweise gedruckten 3D-Teils, durch Verwenden eines Schmelzmittels auf Kohlenschwarzbasis, durch Aufweisen von lokal in der Komponente abgeschiedenem Weichmacher, durch Verwenden eines Schmelzmittels mit höherer Erwärmungseffizienz als ein Nicht-Grenzschichtschmelzmittel, durch Aufweisen einer höheren Ladung von Schmelzmittel in den Grenzschichten oder durch Anwenden mehrerer Grenzfunktionsmittel umfasst.

9. Verfahren nach Anspruch 6, wobei das sequenzielle Drucken (401, 501) von Scheiben eines dreidimensionalen (3D) Druckobjekts (316) das Abscheiden von Schichten aus pulverförmigem Baumaterial (318) auf ein Bett (212) umfasst, und wobei das Verfahren ferner, bei Fortsetzen des Druckens, das Verringern einer Viskosität von mindestens einer Grenzschicht, um einen Vorkomponentenabschnitt des 3D-Druckobjekts mit einem Nachkomponentenabschnitt des 3D-Druckobjekts zu kleben, durch Überhitzung eines Aufnahmebereichs eines teilweise gedruckten 3D-Teils durch Verwenden eines Schmelzmittels auf Kohlenschwarzbasis, durch Aufweisen von lokal in der Komponente abgeschiedenem Weichmacher, durch Verwenden eines Schmelzmittels mit höherer Erwärmungseffizienz als ein Nicht-Grenzschichtschmelzmittel, durch Aufweisen einer höheren Ladung von Schmelzmittel in den Grenzschichten oder durch Anwenden mehrerer Grenzfunktionsmittel umfasst.

10. Verfahren nach Anspruch 6, wobei das sequenzielle Drucken (401, 501) von Scheiben eines dreidimensionalen (3D) Druckobjekts (316) das Abscheiden von Schichten aus pulverförmigem Baumaterial (318) auf ein Bett (212) umfasst, und wobei ein Grenzschmelzmittel verwendet wird, um Grenzschichten zu kleben, wobei das Grenzschmelzmittel sich von dem Schmelzmittel unterscheidet, das verwendet wird, um Nicht-Grenzschichten auszubilden.

11. Verfahren nach Anspruch 6, das ferner, bei Fortsetzen des Druckens, das Abscheiden (508) sequenzieller Schichten eines pulverförmigen Baumaterials auf die Komponente ohne Anwenden von Schmelzmittel, bis das pulverförmige Baumaterial in dem Bett mit einer oberen Oberfläche der Komponente bündig ist, umfasst.

12. Verfahren nach Anspruch 6, das ferner das Vorwärmen (505) der zu bedruckenden Komponente auf eine Temperatur, die während des Druckens aufrechterhalten wird, umfasst.

13. Nichtflüchtiges maschinenlesbares Speichermedium (622), das mit Anweisungen codiert ist, die durch einen Prozessor ausführbar sind, wobei das maschinenlesbare Speichermedium Anweisungen umfasst, um das System nach Anspruch 1 zu veranlassen, das Verfahren nach Anspruch 6 auszuführen.

## Revendications

1. Système de fabrication additive (100), comprenant :
un distributeur de matériau de construction (102) pour déposer des couches de matériau de construction en poudre (318) sur un lit (212) pour former un objet imprimé tridimensionnel (3D) ;
un dispositif de placement (214) pour placer un composant (320) sur une couche de l'objet imprimé 3D (316) ;
un distributeur d'agent de fusion (204) ;
une source de chaleur (108) ;
un dispositif de commande (106) configuré pour :
désactiver le distributeur de matériau de construction (102) pour interrompre l'impression de l'objet imprimé 3D, l'impression étant interrompue pour placer le composant ;
activer la source de chaleur (108) pour, pendant l'interruption de l'impression, maintenir une température de parties fondues d'un objet 3D partiellement imprimé entre une température de solidification et une température de fusion pour le matériau de construction ;
commander le dispositif de placement (214) pour placer un composant sur une couche de l'objet imprimé 3D (316) ;
désactiver la source de chaleur (108) ; et
réactiver le distributeur de matériau de construction (102) pour reprendre l'impression de l'objet imprimé 3D.

2. Système de fabrication additive (100) selon la revendication 1, dans lequel le dispositif de commande est configuré de telle sorte que
la source de chaleur (108) n'est pas active en dehors de l'interruption.

3. Système de fabrication additive (100) selon la revendication 1, dans lequel :
le système de fabrication additive (100) comprend en outre un capteur thermique (322) placé à l'intérieur du lit ; et
le dispositif de commande modifie les caractéristiques d'émission de la source de chaleur (108) en fonction d'une rétroaction provenant du capteur thermique (322).

4. Système de fabrication additive (100) selon la revendication 1, dans lequel, après le placement du composant, le dispositif de commande (106) effectue au moins l'un parmi :
le déclenchement de dépôt de multiples couches de matériau de construction en poudre pour qu'elles affleurent un composant en saillie ; et
le déclenchement d'un dépôt d'une couche de matériau de construction en poudre ayant une épaisseur accrue pour qu'elle affleure un composant en saillie.

5. Système de fabrication additive selon la revendication 1, dans lequel le dispositif de commande est configuré pour déclencher le dépôt d'un agent de fusion sans distribution de matériau de construction en poudre, après placement du composant, pour faire adhérer des couches d'interface de l'objet imprimé 3D les unes aux autres.

6. Procédé, comprenant :
l'impression séquentielle (401, 501) de tranches d'un objet imprimé tridimensionnel (3D) (316) ;
l'interruption (402, 503) de l'impression pour :
allumer (403, 504) une source de chaleur (318) pour maintenir des parties fondues d'un objet imprimé 3D partiellement imprimé (316) entre une température de solidification et une température de fusion ; et
incorporer (404, 506), par l'intermédiaire d'un dispositif de placement (214), un composant (320) dans un corps de l'objet imprimé 3D partiellement imprimé ; et
reprendre (405, 507) l'impression de tranches de l'objet imprimé 3D pour envelopper le composant dans l'objet imprimé 3D.

7. Procédé selon la revendication 6, dans lequel l'impression séquentielle (401, 501) de tranches d'un objet imprimé tridimensionnel (3D) (316) comprend le dépôt de couches de matériau de construction en poudre (318) sur un lit (212), et dans lequel une couche sur laquelle le composant doit être placé est plus épaisse que d'autres couches.

8. Procédé selon la revendication 6, dans lequel l'impression séquentielle (401, 501) de tranches d'un objet imprimé tridimensionnel (3D) (316) comprend le dépôt de couches de matériau de construction en poudre (318) sur un lit (212), et dans lequel le procédé comprend en outre la diminution (502) d'une viscosité d'une couche sur laquelle le composant doit être placé, en surchauffant une zone de réception d'une partie 3D partiellement imprimée, à l'aide d'un agent de fusion à base de noir de carbone, en ayant un plastifiant déposé localement dans le composant, à l'aide d'un agent de fusion avec une efficacité de chauffage plus élevée qu'un agent de fusion de couche non interface, en ayant une charge plus élevée d'agent de fusion dans les couches d'interface, ou en appliquant plusieurs agents fonctionnels d'interface.

9. Procédé selon la revendication 6, dans lequel l'impression séquentielle (401, 501) de tranches d'un objet imprimé tridimensionnel (3D) (316) comprend le dépôt de couches de matériau de construction en poudre (318) sur un lit (212), et dans lequel le procédé comprend en outre, lors de la reprise d'impression, la diminution d'une viscosité d'au moins une couche d'interface pour faire adhérer une partie de pré-composant de l'objet imprimé 3D avec une partie de post-composant de l'objet imprimé 3D, en surchauffant une zone de réception d'une partie 3D partiellement imprimée, à l'aide d'un agent de fusion à base de noir de carbone, en ayant un plastifiant déposé localement dans le composant, à l'aide d'un agent de fusion avec une efficacité de chauffage plus élevée qu'un agent de fusion de couche non interface, en ayant une charge plus élevée d'agent de fusion dans les couches d'interface, ou en appliquant plusieurs agents fonctionnels d'interface.

10. Procédé selon la revendication 6, dans lequel l'impression séquentielle (401, 501) de tranches d'un objet imprimé tridimensionnel (3D) (316) comprend le dépôt de couches de matériau de construction en poudre (318) sur un lit (212), et dans lequel un agent de fusion d'interface est utilisé pour faire adhérer des couches d'interface, l'agent de fusion d'interface étant différent de l'agent de fusion utilisé pour former des couches non interface.

11. Procédé selon la revendication 6, comprenant en outre, lors de la reprise d'impression, le dépôt (508) de couches séquentielles d'un matériau de construction en poudre sur le composant sans application d'agent de fusion, jusqu'à ce que le matériau de construction en poudre dans le lit affleure une surface supérieure du composant.

12. Procédé selon la revendication 6, comprenant en outre le préchauffage (505) du composant sur lequel l'impression doit être réalisée à une température maintenue pendant l'impression.

13. Support de stockage non transitoire lisible par machine (622), codé avec des instructions exécutables par un processeur, le support de stockage lisible par machine comprenant des instructions pour amener le système selon la revendication 1 à exécuter le procédé selon la revendication 6.
